# EUROPEAN PATENT SPECIFICATION

(11) **EP 3 985 826 B1**
(45) Date of publication and mention of the grant of the patent: **03.12.2025**
(21) Application number: 20202119.2
(22) Date of filing: 15.10.2020
(51) Int. Cl.: H02J 7/00

(54) **BATTERY PROTECTION AND VERIFICATION SYSTEM**
BATTERIESCHUTZ- UND VERIFIZIERUNGSSYSTEM
SYSTÈME DE PROTECTION ET DE VÉRIFICATION DE BATTERIE

(43) Date of publication of application: 20.04.2022
(73) Proprietor: ABB Schweiz AG, 5400 Baden (CH)
(72) Inventor: Schrag, Daniel, 8426 Lufingen (CH); Rueegg, Walter, 5304 Endingen (CH); Wicki, Stefan, 5702 Niederlenz (CH); Fraga, Sergio, 5417 Untersiggenthal (CH); Feuerer, Bernhard, 5200 Brugg (CH)
(74) Representative: Sykora & König Patentanwälte PartG mbB

(56) References cited:
- EP-A1- 3 557 717
- EP-B1- 3 557 717
- US-A1- 2010 264 881
- US-A1- 2012 280 572
- US-A1- 2013 151 227

## Description

### FIELD OF THE INVENTION

The invention relates to the field of battery management systems. In particular, the invention relates to a battery protection and verification system and to a method, a computer program and a computer-readable medium for operating such a battery protection and verification system.

### BACKGROUND OF THE INVENTION

For monitoring and protecting batteries such as, for example, in hybrid or electrical vehicles, a battery management system with certified safety features may be used. Such a battery management system may comprise SIL (Safety Integrity Level) or ASIL (Automotive Safety Integrity Level) certified hardware, e.g. microcontrollers, software, firmware or dedicated hardware which interrupts current locally using an electronic switch.

To ensure safe operation of the battery, it is common to measure cell voltages and temperatures of the battery and to balance the cell voltages using a monitoring and control system with basic integrity. The monitoring and control system may switch the battery into a safe state when an overvoltage or overtemperature is detected.

EP 3 416 231 A1 describes a battery module with a plurality of battery cells, a cell monitoring unit configured to monitor temperatures and voltages of the battery cells and a plurality of detecting units configured to independently detect an overtemperature or overvoltage of the battery cells and to notify one another of results of the detection.

EP 3 557 717 A1 describes a battery protection system in a battery pack including a first set of battery cells and a second set of battery cells, a primary protection circuitry, secondary protection modules and, and a fuse. The primary protection circuitry protects the battery cells and from, e.g., an overvoltage condition, under voltage condition, over current condition, short circuit condition, over temperature condition, and/or under temperature condition, etc. A detection circuitry can switch from a normal-working mode to a fast-test mode. A monitoring circuit is coupled to monitoring terminals, a delay circuit is coupled to the monitoring circuit, and a fast-test detection circuit is coupled to the delay circuit. The monitoring circuit includes a set of comparators, wherein each of the comparators can compare a corresponding signal indicative of a voltage difference between two adjacent terminals of the monitoring terminals with a reference voltage. If the corresponding signal is greater than the reference voltage, the comparator outputs a corresponding signal to an OR gate. The comparator can compare a voltage difference between a switching terminal and the first monitoring terminal with a threshold voltage, and generate a result signal to control the delay circuit according to the comparison.

US 2012/280572 A1 describes a testing system in which the secondary protection circuit is under test, wherein the testing system includes a signal generator for generating test signals at pins and a signal analyzer for identifying whether the circuit is operating properly based on the output signal at a pin OUT. According to one embodiment, a testing system, in which control circuit is under test, includes a signal generator and a signal analyzer. The signal generator applies multiple test signals to the pins to simulate cell voltages of battery cells, wherein the test signals can simulate a normal condition and an over-voltage condition. The signal analyzer receives the control signal to determine whether the control circuit is operating properly, e.g., whether the control signal is generated if the control circuit stays in the over-voltage condition for more than a time threshold.

US 2013/151227 A1 describes a simulation apparatus for verifying a battery system by outputting an imaginary simulation voltage, which represents a voltage of a cell and a rack, to the battery system, and receiving cell and rack control results of the battery system obtained using the simulation voltage. The simulation apparatus includes a simulation data output unit, a simulation data verification unit, and a storage unit. The storage unit may store a voltage indicating protection states of excess voltage/low voltage, and/or excess current/low current of a cell or a rack. A tray BMS receives a voltage that indicates protection states of excess voltage/low voltage and/or excess current/low current of a cell or a rack, applied by the simulation data output unit, and according to the voltage, the tray BMS generates imaginary cell control result data.

US 2010/264881 A1 describes a testing device for a battery protection circuit. The testing device comprises a computing unit and a comparator. When the battery protection circuit is tested, a power terminal is grounded, and a power terminal is coupled to a voltage simulating a battery voltage.

### DESCRIPTION OF THE INVENTION

It is an objective of the invention to improve the functional safety of an electrical energy storage system comprising one or more batteries and a battery management system. In particular, it is an objective of the invention to provide a verification system for verifying the correct functionality of the protection and/or measurement units integrated in the electrical energy storage system.

This objective is achieved by the subject-matter of the independent claims. Further exemplary embodiments are evident from the dependent claims and the following description.

A first aspect of the invention relates to a battery protection and verification system for a battery. The battery is composed of a plurality of battery cells, which may be connected in series and/or in parallel. The battery protection and verification system comprises a plurality of voltage measurement units, each adapted for receiving a cell voltage from one of the battery cells, for detecting an overvoltage from the cell voltage and for outputting an overvoltage protection signal for switching the battery into a safe state when the overvoltage is detected. Furthermore, the battery protection and verification system comprises a test signal generator adapted for providing an overvoltage test signal to an input of at least one of the voltage measurement units, the overvoltage test signal simulating the overvoltage, and a test controller adapted for controlling the test signal generator and for verifying whether the overvoltage protection signal is output when the overvoltage test signal is provided to the input of the at least one voltage measurement unit.

For example, the voltage measurement units may each be implemented as hardware, e.g. as voltage measurement circuits. However, it is also possible that the voltage measurement units are implemented as software or as a combination of hardware and software. Each of the voltage measurement units may be connected at its input to a voltage output of a single battery cell. In this way, the output voltages of different battery cells can be monitored independently from each other. An overvoltage may be a cell voltage outside a specific voltage range in which the battery cell is supposed to operate under safe conditions.

An overvoltage protection signal may be an output voltage of a voltage measurement unit. For example, the overvoltage protection signal may be generated by comparing a received cell voltage with an upper and/or lower limit of the above-mentioned voltage range.

The voltage measurement units may be connected at their outputs to one or more safety lines. Such a safety line or trip line may be adapted for operating a main switch for disconnecting the battery from a load and/or a voltage source in case of a detected overvoltage and/or overtemperature.

Generally, the voltage measurement units may be seen as components of a protection system which, additionally to and independently of a battery management device, e.g. a cell monitoring unit or a superordinate controller, protects the battery cells against overvoltage and/or overtemperature. It may be that such a protection system is completely realized in hardware. This has the advantage that the battery cells can be protected using redundant protection paths.

The test signal generator may be a software and/or hardware component adapted for generating the overvoltage test signal from a test command generated by and received from the test controller. The test signal generator may be connected at its output to each of the inputs of the voltage measurement units. Depending on the received test command, the test signal generator may be adapted for outputting the overvoltage test signal to one or more than one selected voltage measurement units and/or to all of the voltage measurement units.

An overvoltage test signal may be seen as a stimulus high enough for causing the voltage measurement unit to output the overvoltage protection signal. For example, the overvoltage test signal may be generated with a test voltage above a specific trip level. The test voltage may be added to the cell voltage at the input of the voltage measurement unit of the corresponding battery cell. Optionally, this input voltage may be measured and monitored by a battery management device such as a cell monitoring unit. For example, the battery management device may be adapted for identifying a battery cell under test based on the measured input voltage.

The overvoltage test signal may be provided for a predefined amount of time, which may be determined in dependence of a switching time required to switch the battery into the safe state (see also below). If the overvoltage protection signal is not output in response to providing the overvoltage test signal, it may be assumed that the respective voltage measurement unit is faulty.

A safe state of the battery may be a state in which the battery is disconnected from any load or voltage source.

The test controller may be implemented as hardware and/or software. The test controller may be connected at its input to one or more safety lines adapted for switching the battery into the safe state. For example, the test controller may be adapted for monitoring a voltage supplied by the safety line and for determining from this voltage whether the overvoltage protection signal has been output or not.

It is possible that at least one of the test signal generator and the test controller is an internal component of a battery management device adapted for balancing the battery cells and/or for protecting the battery cells from overvoltage and/or overtemperature. Alternatively, at least one of the test signal generator and the test controller may be an external component.

Such a battery protection and verification system has the effect that the functionality of the voltage measurement units, i.e. the protection of the battery against overvoltage, can be tested on a regular basis, e.g. during start-up. In this way, safe operation of the battery according to the requirements of the SIL4 certification can be ensured.

Each of the voltage measurement units is connected at its output to one of a plurality of auxiliary switches arranged in a safety line, the safety line adapted for operating a main switch for switching the battery into the safe state, the auxiliary switches operable by the overvoltage protection signal. The auxiliary switches may be series-connected. For example, each of the auxiliary switches may be a normally closed switch, whereas the main switch may be a normally open switch. A main switch and/or an auxiliary switch may, for example, be a galvanically isolated switches. With this embodiment, the main switch can be operated based on the overvoltage protection signal, i.e., based on a signal with a relatively low power level.

According to an embodiment of the invention, a first voltage measurement unit and a second voltage measurement unit are connected at their inputs to each of the battery cells. The test signal generator may be adapted for providing the overvoltage test signal to the input of at least one of the first voltage measurement unit and the second voltage measurement unit. In other words, each of the battery cells may be connected to a different pair composed of a first voltage measurement unit and a second voltage measurement unit. With this embodiment, two redundant overvoltage protection paths can be realized for each battery cell. It is possible that the first and second voltage measurement unit may be completely realized in hardware.

According to an embodiment of the invention, each of the first voltage measurement units is connected at its output to one of a plurality of first auxiliary switches arranged in a first safety line, the first safety line adapted for operating a first main switch for switching the battery into the safe state, the first auxiliary switches operable by the overvoltage protection signal of the first voltage measurement unit. In other words, each first auxiliary switch may be operated by the overvoltage protection signal of the first voltage measurement unit to which the first auxiliary switch is connected.

According to an embodiment of the invention, each of the second voltage measurement units is connected at its output to one of a plurality of second auxiliary switches arranged in a second safety line, the second safety line adapted for operating a second main switch for switching the battery into the safe state, the second auxiliary switches operable by the overvoltage protection signal of the second voltage measurement unit. In other words, each second auxiliary switch may be operated by the overvoltage protection signal of the second voltage measurement unit to which the second auxiliary switch is connected.

The first safety line and the second safety line may be seen as redundant protection paths, which are independent from each other. For example, the first main switch and the second main switch may be connected in series. Using two parallel safety lines significantly increases the reliability of the battery protection and verification system.

According to an embodiment of the invention, the battery protection and verification system further comprises at least one temperature measurement unit adapted for receiving a sensor signal from a temperature sensor of the battery, for detecting an overtemperature from the sensor signal and for outputting an overtemperature protection signal for switching the battery into the safe state when the overtemperature is detected. The test signal generator may be further adapted for providing an overtemperature test signal to an input of the at least one temperature measurement unit, the overtemperature test signal simulating the overtemperature. The test controller may be further adapted for verifying whether the overtemperature protection signal is output when the overtemperature test signal is provided to the input of the at least one temperature measurement unit.

For example, the temperature measurement unit may be implemented as hardware, e.g. as a temperature measurement circuit. However, it is also possible that the temperature measurement unit is implemented as software or as a combination of hardware and software.

A temperature sensor may, for example, be an NTC thermistor or a semiconductor-based sensor. It may be that the temperature measurement unit is implemented as hardware. The sensor signal may be an output voltage of the temperature sensor, corresponding to a certain temperature. For example, the overtemperature may be detected when the temperature indicated by the sensor signal is outside a specific temperature range in which the battery cell is supposed to operate under safe conditions.

An overtemperature protection signal may be an output voltage of the temperature measurement unit. For example, the overtemperature protection signal may be generated by comparing a received sensor signal with an upper and/or lower limit of the above-mentioned temperature range.

An overtemperature test signal may be seen as a stimulus high enough for causing the temperature measurement unit to output the overtemperature protection signal. The overtemperature test signal may be provided for a predefined amount of time, which may be determined in dependence of a switching time required to switch the battery into the safe state. If the overtemperature protection signal is not output in response to providing the overtemperature test signal, it may be assumed that the respective temperature measurement unit is faulty.

With this embodiment, the battery can additionally be protected against overtemperature. Furthermore, safe operation of such an overtemperature protection system can be ensured.

According to an embodiment of the invention, the at least one temperature measurement unit is connected at its output to a further auxiliary switch arranged in the safety line, the further auxiliary switch operable by the overtemperature protection signal. The further auxiliary switch of the temperature measurement unit and the auxiliary switches of the voltage measurement units may be connected in series. For example, the further auxiliary switch of the temperature measurement unit may be of the same type as the auxiliary switches of the voltage measurement units. This way, the main switch can be reliably opened also in case of a detected overtemperature.

According to an embodiment of the invention, a first temperature measurement unit is connected at its input to a first temperature sensor and at its output to a further first auxiliary switch arranged in the first safety line, the further first auxiliary switch operable by the overtemperature protection signal of the first temperature measurement unit. The further first auxiliary switch of the first temperature measurement unit and the first auxiliary switches of the first voltage measurement units may be connected in series.

According to an embodiment of the invention, a second temperature measurement unit is connected at its input to a second temperature sensor and at its output to a further second auxiliary switch arranged in the second safety line, the further second auxiliary switch operable by the overtemperature protection signal of the second temperature measurement unit. The further second auxiliary switch of the second temperature measurement unit and the second auxiliary switches of the second voltage measurement units may be connected in series.

It may be that the battery protection and verification system comprises more than two temperature measurement units, for example more than one first temperature measurement unit and/or more than two second temperature measurement units. The temperature measurement units may each be connected to another temperature sensor and/or to another auxiliary switch. The temperature sensors of different temperature measurement units may be positioned at different places inside and/or outside the battery. For example, each battery cell may have its own temperature sensor. Alternatively, one temperature sensor may be used for monitoring two or more than two battery cells. Using two independent paths for protecting the battery against overtemperature significantly increases the reliability of the battery protection and verification system.

According to an embodiment of the invention, the battery protection and verification system further comprises a battery management device adapted for receiving a cell voltage from each of the battery cells, for detecting an overvoltage from the cell voltage and for outputting a further overvoltage protection signal for switching the battery into the safe state when the overvoltage is detected. Optionally, the test controller and the battery management device may be interconnected for data communication. For example, the battery management device may be adapted for defining which of the voltage measurement units and/or the temperature measurement units should be tested.

The battery management device may comprise a processor and a memory adapted for performing a computer program for monitoring and controlling the battery cells. In other words, the battery management device may comprise hardware as well as software modules, e.g. an operating system. As mentioned above, the test controller and/or the test signal generator may be one of the modules of the battery management device. However, the test controller and/or the test signal generator may also be realized as separate hardware and/or software components.

With this embodiment, the battery can be protected against overvoltage using two independent overvoltage protection paths or even three independent overvoltage protection paths when the first safety line and the second safety line are provided.

According to an embodiment of the invention, the battery management device is further adapted for receiving a further sensor signal from a further temperature sensor of the battery, for detecting an overtemperature from the further sensor signal and for outputting a further overtemperature protection signal for switching the battery into the safe state when the overtemperature is detected.

With this embodiment, the battery can be protected against overtemperature using two independent overtemperature protection paths or even three independent overtemperature protection paths when the first safety line and the second safety line are provided and are each connected to different temperature measurement units.

According to an embodiment of the invention, each of the voltage measurement units is connected at its input to one of the battery cells via a first resistor and a second resistor, which are connected in series. The second resistor may be arranged between the first resistor and the input of the voltage measurement unit. The test signal generator may be connected at its output to a point between the second resistor and the input of the voltage measurement unit. The battery management device may be connected at its input to a point between the first resistor and the second resistor. For example, the first resistor may be a so-called bleeding resistor used to discharge a single battery cell. This has the effect that the battery management device can be used to reliably detect if the correct overvoltage protection signal has been provided.

For example, the battery management device may be adapted for measuring an input voltage of the voltage measurement unit and for determining from the input voltage of the voltage measurement unit whether the overvoltage test signal has been applied correctly or not. Additionally, the battery management device may be adapted for measuring an input voltage of the temperature measurement unit and for determining from the input voltage of the temperature measurement unit whether the overtemperature test signal has been applied correctly or not.

According to an embodiment of the invention, a resistance of the second resistor is greater than a resistance of the first resistor. For example, the second resistor may have a resistance of at least 10 Ω or at least 1 kΩ.

A second aspect of the invention relates to a method for operating a battery protection and verification system according to an embodiment of the first aspect of the invention. The method may be automatically performed by the test controller of the battery protection and verification system, e.g. during start-up. The method comprises generating a test command by the test controller and sending the test command from the test controller to the test signal generator, the test command causing the test signal generator to provide the overvoltage test signal to the input of at least one of the voltage measurement units. Furthermore, the method comprises verifying by the test controller whether the overvoltage protection signal is output when the overvoltage test signal is provided to the input of the at least one voltage measurement unit. For example, the correct function of the at least one voltage measurement unit may be determined when the voltage on the safety line drops to zero after sending the test command.

According to an embodiment of the invention, the test command causes the test signal generator to provide the overvoltage test signal for a time shorter than a switching time of a main switch for switching the battery into the safe state. This has the effect that the overvoltage protection function can be tested without activating the main switch. This way, premature wear of the main switch can be avoided. For example, the time for which the overvoltage test signal is provided may be at least five times or at least ten times shorter than the switching time of the main switch.

A third aspect of the invention relates to a computer program comprising instructions which, when the computer program is executed by a computer, cause the computer to carry out the method according to an embodiment of the second aspect of the invention.

For example, the computer program may be stored in the test controller of the battery protection and verification system. The test controller may comprise a memory in which the computer program is stored and a processor for executing the computer program.

A fourth aspect of the invention relates to a computer-readable medium comprising instructions which, when executed by a computer, cause the computer to carry out the method according to an embodiment of the second aspect of the invention.

A computer-readable medium may be a floppy disk, a hard disk, a USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a nonvolatile or volatile memory.

It has to be understood that features of the battery protection and verification system as described above and below may be features of the method, the computer program and the computer-readable medium as described above and below, and vice versa.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a battery protection and verification system according to an embodiment of the invention.
Fig. 2 shows a section of the battery protection and verification system of fig. 1 in more detail.
Fig. 3 schematically shows a flow diagram of a method for operating the battery protection and verification system of fig. 1.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

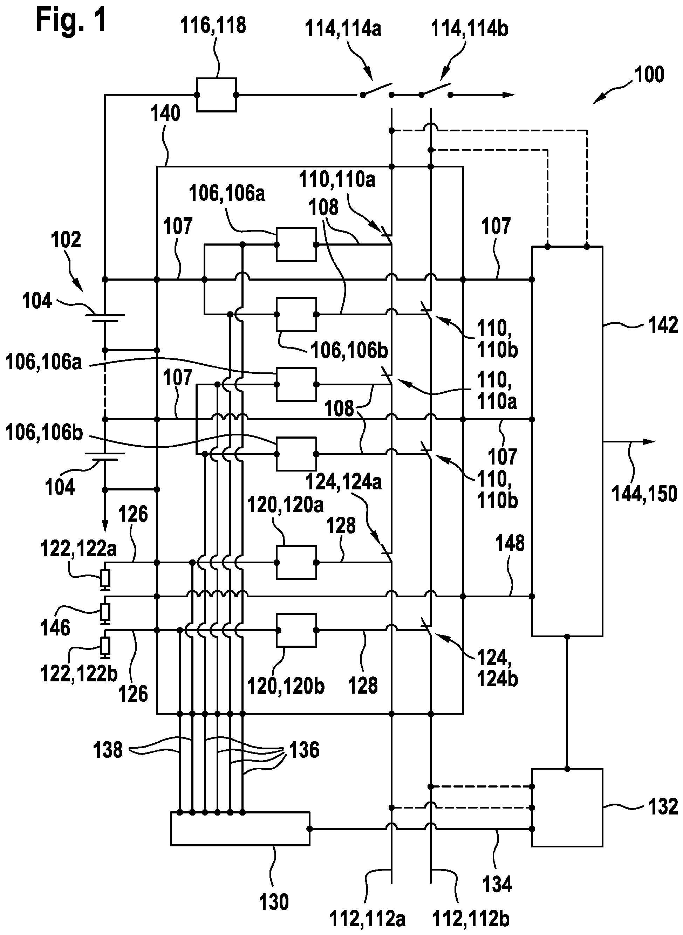

Fig. 1 schematically shows a battery protection and verification system 100 for a battery 102 composed of a plurality of battery cells 104, which may be connected in series. Additionally or alternatively, the battery cells 104 may be connected in parallel. For example, the battery 102 may be composed of multiple pairs of battery cells 104, wherein the battery cells 104 of each pair are connected in parallel and wherein the pairs are connected in series.

The battery protection and verification system 100 further comprises a plurality of voltage measurement units 106. Each of the battery cells 104 has its own voltage measurement unit 106. The voltage measurement unit 106 receives a cell voltage 107 from the respective battery cell 104 and determines from the cell voltage 107 whether there is an overvoltage or not. If the overvoltage is detected, the voltage measurement unit 106 outputs an overvoltage protection signal 108 for switching the battery 102 into a safe state in which the battery 102 is protected against the overvoltage.

It may be that each of the voltage measurement units 106 is connected at its output to one of a plurality of auxiliary switches 110 arranged in a safety line 112. The auxiliary switches 110 may be connected in series. The safety line 112 may be connected to terminals of a main switch 114 which, in a closed state, connects the battery 102 to a voltage source 116 and/or a load 118 and, in an open state, disconnects the battery 102 from the voltage source 116 and/or the load 118. The open state of the main switch 114 may therefore correspond to the safe state of the battery 102.

Each of the voltage measurement units 106 may have its own auxiliary switch 110. The overvoltage protection signal 108 output by the voltage measurement unit 106 may cause the respective auxiliary switch 110 to switch into an open state. Such interruption of the safety line 112 may cause the main switch 114 to switch into the open state.

For example, each of the battery cells 104 may be connected to a first voltage measurement unit 106a and a second voltage measurement unit 106b, as shown in fig. 1.

It may be that each of the first voltage measurement units 106a is connected at its output to one of a plurality of first auxiliary switches 110a arranged in a first safety line 112a and that each of the second voltage measurement units 106b is connected at its output to one of a plurality of second auxiliary switches 110b arranged in a second safety line 112b, which operates independently from the first safety line 112a. The first safety line 112a may be connected to terminals of a first main switch 114a and the second safety line 112b may be connected to terminals of a second main switch 114b. For example, the first main switch 114a and the second main switch 114b may be connected in series between the battery 102 and the voltage source 116 and/or the load 118. Thus, the battery 102 can be switched into the safe state even if one of the safety lines 116a, 116b does not work correctly.

In addition to the voltage measurement units 106, 106a, 106b, the battery protection and verification system 100 may comprise a temperature measurement unit 120 connected at its input to a temperature sensor 122 of the battery 102, e.g. an NTC thermistor, and at its output to a further auxiliary switch 124 arranged in the safety line 112. The temperature measurement unit 120 receives a sensor signal 126 from the temperature sensor 122 and determines from the sensor signal 126 whether there is an overtemperature or not. If the overtemperature is detected, the temperature measurement unit 120 outputs an overtemperature protection signal 128 for switching the battery 102 into the safe state in which the battery 102 is protected against the overtemperature. The overtemperature protection signal 128 may cause the further auxiliary switch 124 to switch into an open state.

It is possible that the battery protection and verification system 100 comprises more than one temperature measurement unit 120. For example, the battery protection and verification system 100 may comprise at least a first temperature measurement unit 120a and a second temperature measurement unit 120b, wherein the first temperature measurement unit 120a is connected at its input to a first temperature sensor 122a of the battery 102 and at its output to a further first auxiliary switch 124a arranged in the first safety line 112a and wherein the second temperature measurement unit 120b is connected at its input to a second temperature sensor 122b of the battery 102 and at its output to a further second auxiliary switch 124b arranged in the second safety line 112b. Thus, the battery 102 can be protected against overtemperature using two redundant overtemperature protection paths.

It may be that one temperature measurement unit 120, 120a, 120b is shared between different battery cells 104.

In order to verify whether the voltage measurement units 106, 106a, 106b and, additionally, the temperature measurement units 120, 120a, 120b work correctly, the battery protection and verification system 100 is equipped with a test signal generator 130, which is controlled by a test controller 132.

The test controller 132 generates a test command 134 and sends it to the test signal generator 130. The test command 134 may comprise instructions which cause the test signal generator 130 to provide an overvoltage test signal 136 to the input of at least one of the voltage measurement units 106, 106a, 106b. The overvoltage test signal 136 simulates an overvoltage and, under regular conditions, causes the respective voltage measurement unit 106, 106a, 106b to output the overvoltage protection signal 108. For example, the overvoltage test signal 136 may be a test voltage which, at the input of the voltage measurement unit 106, 106a, 106b, is added to the cell voltage 107 of the respective battery cell 104.

Additionally, the test commands 134 may comprise instructions which cause the test signal generator 130 to provide an overtemperature test signal 138 to the input of at least one of the temperature measurement units 120, 120a, 120b. The overtemperature test signal 138 simulates an overtemperature and, under normal conditions, causes the respective temperature measurement unit 120, 120a, 120b to output the overtemperature protection signal 128. For example, the overtemperature test signal 138 may be a test voltage which, at the input of the temperature measurement unit 120, 120a, 120b, is added to an output voltage of the respective temperature sensor 122, 122a, 122b in the form of the sensor signal 126.

The test controller 132 further verifies whether the overvoltage protection signal 108 is output when the overvoltage test signal 136 is provided. Additionally, the test controller 132 may further verify whether the overtemperature protection signal 128 is output when the overtemperature test signal 138 is provided. To do so, the test controller 132 may be connected at its input to the corresponding safety line 112, 112a, 112b.

For example, the voltage measurement units 106, 106a, 106b and the temperature measurement units 120, 120a, 120b may be components of a battery protection board 140, which may be mounted onto the battery 102.

In addition to the voltage measurement units 106, 106a, 106b and/or the temperature measurement units 120, 120a, 120b, the battery protection and verification system 100 may comprise a battery management device 142 for monitoring and controlling, e.g. balancing, the battery cells 104. The battery management device 142 may comprise hardware and/or software components, such as a cell monitoring unit or an operating system. The battery management device 142 may also receive the cell voltage 107 from each of the battery cells 104 and may also use them to determine whether there is an overvoltage or not. If the overvoltage is detected, the battery management device 142 may output a further overvoltage protection signal 144 for disconnecting the battery 102 from the voltage source 116 and/or the load 118.

Additionally, the battery management device 142 may be connected at its input to a further temperature sensor 146 of the battery 102, e.g. a further NTC thermistor. The battery management device 142 may receive a further sensor signal 148 from the further temperature sensor 146 and may determine from the further sensor signal 148 whether there is an overtemperature or not. If the overtemperature is detected, the battery management device 142 may output a further overtemperature protection signal 150 for disconnecting the battery 102 from the voltage source 116 and/or the load 118.

By testing the voltage measurement units 106, 106a, 106b and, additionally, the temperature measurement units 120, 120a, 120b using the above test system composed of the test signal generator 130 and the test controller 132, a very high integrity level can be achieved.

By combining the first safety line 112a and the second safety line 112b with protection features of the battery management device 142, the battery 102 can be protected against overvoltage and/or overtemperature using three independent protection paths. This significantly enhances the reliability of the whole system.

The test signal generator 130 and/or the test controller 132 may be fully independent from the battery management device 142 or may be, at least partially, integrated in the battery management device 142.

For example, the battery management device 142 and the test controller 132 may be interconnected for data communication.

It is also possible that at least one of the test signal generator 130 and the test controller 132 is realized as an external module and is physically connected to the battery 102 only during a test and verification process. Such a test and verification process may be initiated by an operating system of the battery management device 142, e.g. during start-up or after every charging of the battery 102. Alternatively, the test and verification process may be initiated manually by an operator.

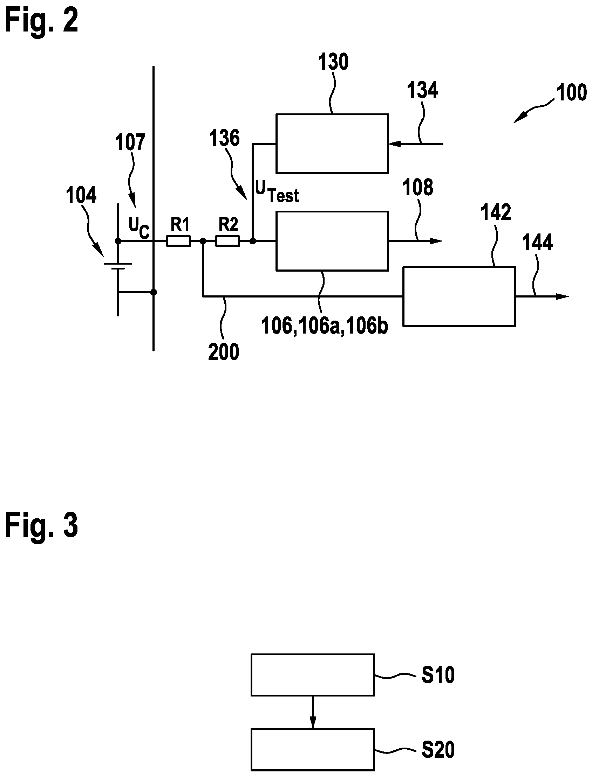

As shown in fig. 2, it is also possible, by using an appropriate impedance distribution, to check if the test signal generator 130 has applied the correct overvoltage test signal U_{Test}, 136 to the correct voltage measurement unit 106, 106a, 106b.

For example, each of the voltage measurement units 106, 106a, 106b may be connected at its input via a first resistor R1 and a second resistor R2 to one of the battery cells 104 having the cell voltage U_{C}, 107. The resistors R1 and R2 may be connected in series. The second resistor R2 may be arranged between the first resistor R1 and the input of the respective voltage measurement unit 106, 106a, 106b. A test signal output of the test signal generator 130 may be connected to a point between the second resistor R2 and the input of the respective voltage measurement unit 106, 106a, 106b. To read back an input voltage 200 of the respective voltage measurement unit 106, 106a, 106b, the input of the battery management device 142 may be connected to a point between the first resistor R1 and the second resistor R2. This input voltage 200 changes by a predetermined amount when the overvoltage test signal U_{Test}, 136 is applied, which may be monitored by the battery management device 142. Depending on the change of the input voltage 200, the battery management device 142 may determine whether the overvoltage test signal 136 has been applied correctly or not.

It may also be that the battery management device 142 outputs the further overvoltage protection signal 144 when the overvoltage test signal U_{Test}, 136 has been applied correctly. This opens an additional verified protection path. With two redundant protection paths for each battery cell 104 and the normal operation measurements, such a system therefore is equipped with three verified protection paths. In case of a failure of one of the protection paths, there are still two redundant protection paths. Such a system enables short verification intervals. Even with only one protection path, the failure rate can be strongly reduced.

Fig. 3 illustrates a method for operating the battery protection and verification system 100 of fig. 1.

In step S10, the test command 134 is generated by the test controller 132 and is sent from the test controller 132 to the test signal generator 130. The test command 134 causes the test signal generator 130 to provide the overvoltage test signal 136 to the input of at least one of the voltage measurement units 106, 106a, 106b.

In step S20, the test controller 132 verifies whether the overvoltage protection signal 108 is output when the overvoltage test signal 136 is provided to the input of the at least one voltage measurement unit 106, 106a, 106b.

It may be that the test command 134 causes the test signal generator 130 to provide the overvoltage test signal 136 for a time shorter than a predefined reaction or switching time of the main switch 114, 114a, 114b. This avoids premature wear of the main switch 114, 114a, 114b.

### LIST OF REFERENCE SYMBOLS

- 100: battery protection and verification system
- 102: battery
- 104: battery cell
- 106: voltage measurement unit
- 106a: first voltage measurement unit
- 106b: second voltage measurement unit
- 107: cell voltage
- 108: overvoltage protection signal
- 110: auxiliary switch
- 110a: first auxiliary switch
- 110b: second auxiliary switch
- 112: safety line
- 112a: first safety line
- 112b: second safety line
- 114: main switch
- 114a: first main switch
- 114b: second main switch
- 116: voltage source
- 118: load
- 120: temperature measurement unit
- 120a: first temperature measurement unit
- 120b: second temperature measurement unit
- 122: temperature sensor
- 122a: first temperature sensor
- 122b: second temperature sensor
- 124: further auxiliary switch
- 124a: further first auxiliary switch
- 124b: further second auxiliary switch
- 126: sensor signal
- 128: overtemperature protection signal
- 130: test signal generator
- 132: test controller
- 134: test command
- 136: overvoltage test signal
- 138: overtemperature test signal
- 140: battery protection board
- 142: battery management device
- 144: further overvoltage protection signal
- 146: further temperature sensor
- 148: further sensor signal
- 150: further overtemperature protection signal
- 200: input voltage
- R1: first resistor
- R2: second resistor
- U_{C}: cell voltage
- U_{Test}: overvoltage test signal

## Claims

1. A battery protection and verification system (100) for a battery (102), the battery (102) composed of a plurality of battery cells (104), the battery protection and verification system (100) comprising:
a plurality of voltage measurement units (106, 106a, 106b), each adapted for receiving a cell voltage (107, U_{C}) from one of the battery cells (104), for detecting an overvoltage from the cell voltage (107, U_{C}) and for outputting an overvoltage protection signal (108) for switching the battery (102) into a safe state when the overvoltage is detected;
a test signal generator (130) adapted for providing an overvoltage test signal (136) to an input of at least one of the voltage measurement units (106, 106a, 106b), the overvoltage test signal (136) simulating the overvoltage; and
a test controller (132) adapted for controlling the test signal generator (130) and for verifying whether the overvoltage protection signal (108) is output when the overvoltage test signal (136) is provided to the input of the at least one voltage measurement unit (106, 106a, 106b),
**characterized in that** each of the voltage measurement units (106, 106a, 106b) is connected at its output to one of a plurality of auxiliary switches (110, 110a, 110b) arranged in a safety line (112, 112a, 112b), the safety line (112, 112a, 112b) adapted for operating a main switch (114, 114a, 114b) for switching the battery (102) into the safe state, the auxiliary switches (110, 110a, 110b) operable by the overvoltage protection signal (108).

2. The battery protection and verification system (100) of claim 1,
wherein a first voltage measurement unit (106a) and a second voltage measurement unit (106b) are connected at their inputs to each of the battery cells (104);
wherein the test signal generator (130) is adapted for providing the overvoltage test signal (136) to the input of at least one of the first voltage measurement unit (106a) and the second voltage measurement unit (106b).

3. The battery protection and verification system (100) of claim 2,
wherein each of the first voltage measurement units (106a) is connected at its output to one of a plurality of first auxiliary switches (110a) arranged in a first safety line (112a), the first safety line (112a) adapted for operating a first main switch (114a) for switching the battery (102) into the safe state, the first auxiliary switches (110a) operable by the overvoltage protection signal (108) of the first voltage measurement unit (106a); and/or
wherein each of the second voltage measurement units (106b) is connected at its output to one of a plurality of second auxiliary switches (110b) arranged in a second safety line (112b), the second safety line (112b) adapted for operating a second main switch (114b) for switching the battery (102) into the safe state, the second auxiliary switches (110b) operable by the overvoltage protection signal (108) of the second voltage measurement unit (106b).

4. The battery protection and verification system (100) of one of the previous claims, further comprising:
at least one temperature measurement unit (120, 120a, 120b) adapted for receiving a sensor signal (126) from a temperature sensor (122, 122a, 122b) of the battery (102), for detecting an overtemperature from the sensor signal (126) and for outputting an overtemperature protection signal (138) for switching the battery (102) into the safe state when the overtemperature is detected;
wherein the test signal generator (130) is further adapted for providing an overtemperature test signal to an input of the at least one temperature measurement unit (120, 120a, 120b), the overtemperature test signal simulating the overtemperature;
wherein the test controller (132) is further adapted for verifying whether the overtemperature protection signal (138) is output when the overtemperature test signal is provided to the input of the at least one temperature measurement unit (120, 120a, 120b).

5. The battery protection and verification system (100) of claim 4 in combination with claim 1,
wherein the at least one temperature measurement unit (120, 120a, 120b) is connected at its output to a further auxiliary switch (124, 124a, 124b) arranged in the safety line (112, 112a, 112b), the further auxiliary switch (124, 124a, 124b) operable by the overtemperature protection signal (138).

6. The battery protection and verification system (100) of claim 4 in combination with claim 3,
wherein a first temperature measurement unit (120a) is connected at its input to a first temperature sensor (122a) and at its output to a further first auxiliary switch (124a) arranged in the first safety line (112a), the further first auxiliary switch (124a) operable by the overtemperature protection signal (138) of the first temperature measurement unit (120a); and/or
wherein a second temperature measurement unit (120b) is connected at its input to a second temperature sensor (122b) and at its output to a further second auxiliary switch (124b) arranged in the second safety line (112b), the further second auxiliary switch (124b) operable by the overtemperature protection signal (138) of the second temperature measurement unit (120b).

7. The battery protection and verification system (100) of one of the previous claims, further comprising:
a battery management device (142) adapted for receiving a cell voltage (107, U_{C}) from each of the battery cells (104), for detecting an overvoltage from the cell voltage (107, U_{C}) and for outputting a further overvoltage protection signal (144) for switching the battery (102) into the safe state when the overvoltage is detected.

8. The battery protection and verification system (100) of claim 7,
wherein the battery management device (142) is further adapted for receiving a further sensor signal (148) from a further temperature sensor (146) of the battery (102), for detecting an overtemperature from the further sensor signal (148) and for outputting a further overtemperature protection signal (150) for switching the battery (102) into the safe state when the overtemperature is detected.

9. The battery protection and verification system (100) of claim 7 or 8,
wherein each of the voltage measurement units (106, 106a, 106b) is connected at its input to one of the battery cells (104) via a first resistor (R1) and a second resistor (R2), which are connected in series;
wherein the second resistor (R2) is arranged between the first resistor (R1) and the input of the voltage measurement unit (106, 106a, 106b);
wherein the test signal generator (130) is connected at its output to a point between the second resistor (R2) and the input of the voltage measurement unit (106, 106a, 106b);
wherein the battery management device (142) is connected at its input to a point between the first resistor (R1) and the second resistor (R2).

10. The battery protection and verification system (100) of claim 9,
wherein a resistance of the second resistor (R2) is greater than a resistance of the first resistor (R1).

11. A method for operating a battery protection and verification system (100) of one of the previous claims, the method comprising:
generating a test command (134) by the test controller (132) and sending the test command (134) from the test controller (132) to the test signal generator (130), the test command (134) causing the test signal generator (130) to provide the overvoltage test signal (136) to the input of at least one of the voltage measurement units (106, 106a, 106b); and
verifying by the test controller (132) whether the overvoltage protection signal (108) is output when the overvoltage test signal (136) is provided to the input of the at least one voltage measurement unit (106, 106a, 106b).

12. The method of claim 11,
wherein the test command (134) causes the test signal generator (130) to provide the overvoltage test signal (136) for a time shorter than a switching time of a main switch (114, 114a, 114b) for switching the battery (102) into the safe state.

13. A computer program comprising instructions which, when the computer program is executed by a computer (132), cause the computer (132) to carry out the method of claim 11 or 12.

14. A computer-readable medium comprising instructions which, when executed by a computer (132), cause the computer (132) to carry out the method of claim 12 or 13.

## Patentansprüche

1. Batterieschutz- und -prüfsystem (100) für eine Batterie (102), wobei die Batterie (102) aus einer Vielzahl von Batteriezellen (104) besteht, wobei das Batterieschutz- und -prüfsystem (100) umfasst:
eine Vielzahl von Spannungsmesseinheiten (106, 106a, 106b), die jeweils dazu ausgelegt sind, eine Zellenspannung (107, U_{C}) von einer der Batteriezellen (104) zu empfangen, eine Überspannung aus der Zellenspannung (107, U_{C}) zu erkennen und ein Überspannungsschutzsignal (108) auszugeben, um die Batterie (102) in einen sicheren Zustand zu schalten, wenn die Überspannung erkannt wird;
einen Testsignalgenerator (130), der dazu ausgelegt ist, ein Überspannungstestsignal (136) an einen Eingang mindestens einer der Spannungsmesseinheiten (106, 106a, 106b) zu liefern, wobei das Überspannungstestsignal (136) die Überspannung simuliert; und
eine Teststeuerung (132), die dazu ausgelegt ist, den Testsignalgenerator (130) zu steuern und zu prüfen, ob das Überspannungsschutzsignal (108) ausgegeben wird, wenn das Überspannungstestsignal (136) an den Eingang der mindestens einen Spannungsmesseinheit (106, 106a, 106b) bereitgestellt wird,
**dadurch gekennzeichnet, dass** jede der Spannungsmesseinheiten (106, 106a, 106b) an ihrem Ausgang mit einem einer Vielzahl von Hilfsschaltern (110, 110a, 110b) verbunden ist, die in einer Sicherheitsleitung (112, 112a, 112b) angeordnet sind, wobei die Sicherheitsleitung (112, 112a, 112b) zum Betätigen eines Hauptschalters (114, 114a, 114b) zum Schalten der Batterie (102) in den sicheren Zustand ausgelegt ist, wobei die Hilfsschalter (110, 110a, 110b) durch das Überspannungsschutzsignal (108) betätigbar sind.

2. Batterieschutz- und -prüfsystem (100) nach Anspruch 1,
wobei eine erste Spannungsmesseinheit (106a) und eine zweite Spannungsmesseinheit (106b) an ihren Eingängen mit jeder der Batteriezellen (104) verbunden sind;
wobei der Testsignalgenerator (130) dazu ausgelegt ist, das Überspannungstestsignal (136) an den Eingang mindestens einer der ersten Spannungsmesseinheit (106a) und der zweiten Spannungsmesseinheit (106b) bereitzustellen.

3. Batterieschutz- und -prüfsystem (100) nach Anspruch 2,
wobei jede der ersten Spannungsmesseinheiten (106a) an ihrem Ausgang mit einem einer Vielzahl erster Hilfsschalter (110a) verbunden ist, die in einer ersten Sicherheitsleitung (112a) angeordnet sind, wobei die erste Sicherheitsleitung (112a) dazu ausgelegt ist, einen ersten Hauptschalter (114a) zu betätigen, um die Batterie (102) in den sicheren Zustand zu schalten, wobei die ersten Hilfsschalter (110a) durch das Überspannungsschutzsignal (108) der ersten Spannungsmesseinheit (106a) betätigbar sind; und/oder
wobei jede der zweiten Spannungsmesseinheiten (106b) an ihrem Ausgang mit einem einer Vielzahl zweiter Hilfsschalter (110b) verbunden ist, die in einer zweiten Sicherheitsleitung (112b) angeordnet sind, wobei die zweite Sicherheitsleitung (112b) dazu ausgelegt ist, einen zweiten Hauptschalter (114b) zu betätigen, um die Batterie (102) in den sicheren Zustand zu schalten, wobei die zweiten Hilfsschalter (110b) durch das Überspannungsschutzsignal (108) der zweiten Spannungsmesseinheit (106b) betätigbar sind.

4. Batterieschutz- und -prüfsystem (100) nach einem der vorhergehenden Ansprüche, ferner umfassend:
mindestens eine Temperaturmesseinheit (120, 120a, 120b), die dazu ausgelegt ist, ein Sensorsignal (126) von einem Temperatursensor (122, 122a, 122b) der Batterie (102) zu empfangen, eine Übertemperatur aus dem Sensorsignal (126) zu erkennen und ein Übertemperaturschutzsignal (138) auszugeben, um die Batterie (102) in den sicheren Zustand zu schalten, wenn die Übertemperatur erkannt wird;
wobei der Testsignalgenerator (130) ferner dazu ausgelegt ist, ein Übertemperaturtestsignal an einen Eingang der mindestens einen Temperaturmesseinheit (120, 120a, 120b) bereitzustellen, wobei das Übertemperaturtestsignal die Übertemperatur simuliert;
wobei die Teststeuerung (132) ferner dazu ausgelegt ist, zu prüfen, ob das Übertemperaturschutzsignal (138) ausgegeben wird, wenn das Übertemperaturtestsignal an den Eingang der mindestens einen Temperaturmesseinheit (120, 120a, 120b) bereitgestellt wird.

5. Batterieschutz- und -prüfsystem (100) nach Anspruch 4 in Kombination mit Anspruch 1,
wobei die mindestens eine Temperaturmesseinheit (120, 120a, 120b) an ihrem Ausgang mit einem weiteren Hilfsschalter (124, 124a, 124b) verbunden ist, der in der Sicherheitsleitung (112, 112a, 112b) angeordnet ist, wobei der weitere Hilfsschalter (124, 124a, 124b) durch das Übertemperaturschutzsignal (138) betätigbar ist.

6. Batterieschutz- und -prüfsystem (100) nach Anspruch 4 in Kombination mit Anspruch 3,
wobei eine erste Temperaturmesseinheit (120a) an ihrem Eingang mit einem ersten Temperatursensor (122a) und an ihrem Ausgang mit einem weiteren ersten Hilfsschalter (124a) verbunden ist, der in der ersten Sicherheitsleitung (112a) angeordnet ist, wobei der weitere erste Hilfsschalter (124a) durch das Übertemperaturschutzsignal (138) der ersten Temperaturmesseinheit (120a) betätigbar ist; und/oder
wobei eine zweite Temperaturmesseinheit (120b) an ihrem Eingang mit einem zweiten Temperatursensor (122b) und an ihrem Ausgang mit einem weiteren zweiten Hilfsschalter (124b) verbunden ist, der in der zweiten Sicherheitsleitung (112b) angeordnet ist, wobei der weitere zweite Hilfsschalter (124b) durch das Übertemperaturschutzsignal (138) der zweiten Temperaturmesseinheit (120b) betätigbar ist.

7. Batterieschutz- und -prüfsystem (100) nach einem der vorhergehenden Ansprüche, ferner umfassend:
eine Batterieverwaltungsvorrichtung (142), die dazu ausgelegt ist, eine Zellenspannung (107, U_{C}) von jeder der Batteriezellen (104) zu empfangen, eine Überspannung aus der Zellenspannung (107, U_{C}) zu erkennen und ein weiteres Überspannungsschutzsignal (144) auszugeben, um die Batterie (102) in den sicheren Zustand zu schalten, wenn die Überspannung erkannt wird.

8. Batterieschutz- und -prüfsystem (100) nach Anspruch 7,
wobei die Batterieverwaltungsvorrichtung (142) ferner dazu ausgelegt ist, ein weiteres Sensorsignal (148) von einem weiteren Temperatursensor (146) der Batterie (102) zu empfangen, eine Übertemperatur aus dem weiteren Sensorsignal (148) zu erkennen und ein weiteres Übertemperaturschutzsignal (150) auszugeben, um die Batterie (102) in den sicheren Zustand zu schalten, wenn die Übertemperatur erkannt wird.

9. Batterieschutz- und -prüfsystem (100) nach Anspruch 7 oder 8,
wobei jede der Spannungsmesseinheiten (106, 106a, 106b) an ihrem Eingang über einen ersten Widerstand (R1) und einen zweiten Widerstand (R2), die in Reihe geschaltet sind, mit einer der Batteriezellen (104) verbunden ist;
wobei der zweite Widerstand (R2) zwischen dem ersten Widerstand (R1) und dem Eingang der Spannungsmesseinheit (106, 106a, 106b) angeordnet ist;
wobei der Testsignalgenerator (130) an seinem Ausgang mit einem Punkt zwischen dem zweiten Widerstand (R2) und dem Eingang der Spannungsmesseinheit (106, 106a, 106b) verbunden ist;
wobei die Batterieverwaltungsvorrichtung (142) an ihrem Eingang mit einem Punkt zwischen dem ersten Widerstand (R1) und dem zweiten Widerstand (R2) verbunden ist.

10. Batterieschutz- und -prüfsystem (100) nach Anspruch 9,
wobei ein Widerstandswert des zweiten Widerstands (R2) größer ist als ein Widerstandswert des ersten Widerstands (R1).

11. Verfahren zum Betreiben eines Batterieschutz- und - prüfsystems (100) nach einem der vorhergehenden Ansprüche, wobei das Verfahren umfasst:
Erzeugen eines Testbefehls (134) durch die Teststeuerung (132) und Senden des Testbefehls (134) von der Teststeuerung (132) an den Testsignalgenerator (130), wobei der Testbefehl (134) bewirkt, dass der Testsignalgenerator (130) das Überspannungstestsignal (136) an den Eingang mindestens einer der Spannungsmesseinheiten (106, 106a, 106b) bereitstellt; und
Prüfen durch die Teststeuerung (132), ob das Überspannungsschutzsignal (108) ausgegeben wird, wenn das Überspannungstestsignal (136) an den Eingang der mindestens einen Spannungsmesseinheit (106, 106a, 106b) bereitgestellt wird.

12. Verfahren nach Anspruch 11,
wobei der Testbefehl (134) bewirkt, dass der Testsignalgenerator (130) das Überspannungstestsignal (136) für eine Zeit bereitstellt, die kürzer ist als eine Schaltzeit eines Hauptschalters (114, 114a, 114b) zum Schalten der Batterie (102) in den sicheren Zustand.

13. Computerprogramm, das Anweisungen umfasst, die, wenn das Computerprogramm durch einen Computer (132) ausgeführt wird, bewirken, dass der Computer (132) das Verfahren nach Anspruch 11 oder 12 durchführt.

14. Computerlesbares Medium, das Anweisungen umfasst, die, wenn sie durch einen Computer (132) ausgeführt werden, bewirken, dass der Computer (132) das Verfahren nach Anspruch 11 oder 12 durchführt.

## Revendications

1. Système de protection et de vérification de batterie (100) pour une batterie (102), la batterie (102) étant composée d'une pluralité de cellules de batterie (104), le système de protection et de vérification de batterie (100) comprenant :
une pluralité d'unités de mesure de tension (106, 106a, 106b), chacune étant adaptée à recevoir une tension de cellule (107, U_{C}) depuis l'une des cellules de batterie (104), à détecter une surtension à partir de la tension de cellule (107, U_{C}) et à délivrer un signal de protection contre les surtensions (108) destiné à commuter la batterie (102) sur un état de sécurité lorsque la surtension est détectée ;
un générateur de signal de test (130) adapté à fournir un signal de test de surtension (136) à une entrée d'au moins une des unités de mesure de tension (106, 106a, 106b), le signal de test de surtension (136) simulant la surtension ; et
un contrôleur de test (132) adapté à commander le générateur de signal de test (130) et à vérifier si le signal de protection contre les surtensions (108) est délivré lorsque le signal de test de surtension (136) est fourni à l'entrée de l'au moins une unité de mesure de tension (106, 106a, 106b),
**caractérisé en ce que** chacune des unités de mesure de tension (106, 106a, 106b) est connectée, à sa sortie, à l'un d'une pluralité de commutateurs auxiliaires (110, 110a, 110b) agencés dans une ligne de sécurité (112, 112a, 112b), la ligne de sécurité (112, 112a, 112b) étant adaptée à actionner un commutateur principal (114, 114a, 114b) destiné à commuter la batterie (102) sur l'état de sécurité, les commutateurs auxiliaires (110, 110a, 110b) étant actionnables par le signal de protection contre les surtensions (108).

2. Système de protection et de vérification de batterie (100) selon la revendication 1,
dans lequel une première unité de mesure de tension (106a) et une deuxième unité de mesure de tension (106b) sont connectées, à leurs entrées, à chacune des cellules de batterie (104) ;
dans lequel le générateur de signal de test (130) est adapté à fournir le signal de test de surtension (136) à l'entrée de la première unité de mesure de tension (106a) et/ou de la deuxième unité de mesure de tension (106b).

3. Système de protection et de vérification de batterie (100) selon la revendication 2,
dans lequel chacune des premières unités de mesure de tension (106a) est connectée, à sa sortie, à l'un d'une pluralité de premiers commutateurs auxiliaires (110a) agencés dans une première ligne de sécurité (112a), la première ligne de sécurité (112a) étant adaptée à actionner un premier commutateur principal (114a) destiné à commuter la batterie (102) sur l'état de sécurité, les premiers commutateurs auxiliaires (110a) étant actionnables par le signal de protection contre les surtensions (108) de la première unité de mesure de tension (106a) ; et/ou
dans lequel chacune des deuxièmes unités de mesure de tension (106b) est connectée, à sa sortie, à l'un d'une pluralité de deuxièmes commutateurs auxiliaires (110b) agencés dans une deuxième ligne de sécurité (112b), la deuxième ligne de sécurité (112b) étant adaptée à actionner un deuxième commutateur principal (114b) destiné à commuter la batterie (102) sur l'état de sécurité, les deuxièmes commutateurs auxiliaires (110b) étant actionnables par le signal de protection contre les surtensions (108) de la deuxième unité de mesure de tension (106b).

4. Système de protection et de vérification de batterie (100) selon l'une des revendications précédentes, comprenant en outre :
au moins une unité de mesure de température (120, 120a, 120b) adaptée à recevoir un signal de capteur (126) depuis un capteur de température (122, 122a, 122b) de la batterie (102), à détecter une température excessive à partir du signal de capteur (126) et à délivrer un signal de protection contre les températures excessives (138) destiné à commuter la batterie (102) sur l'état de sécurité lorsque la température excessive est détectée ;
dans lequel le générateur de signal de test (130) est adapté en outre à fournir un signal de test de température excessive à une entrée de l'au moins une unité de mesure de température (120, 120a, 120b), le signal de test de température excessive simulant la température excessive ;
dans lequel le contrôleur de test (132) est adapté en outre à vérifier si le signal de protection contre les températures excessives (138) est délivré lorsque le signal de test de température excessive est fourni à l'entrée de l'au moins une unité de mesure de température (120, 120a, 120b).

5. Système de protection et de vérification de batterie (100) selon la revendication 4 en combinaison avec la revendication 1,
dans lequel l'au moins une unité de mesure de température (120, 120a, 120b) est connectée, à sa sortie, à un commutateur auxiliaire supplémentaire (124, 124a, 124b) agencé dans la ligne de sécurité (112, 112a, 112b), le commutateur auxiliaire supplémentaire (124, 124a, 124b) étant actionnable par le signal de protection contre les températures excessives (138).

6. Système de protection et de vérification de batterie (100) selon la revendication 4 en combinaison avec la revendication 3,
dans lequel une première unité de mesure de température (120a) est connectée, à son entrée, à un premier capteur de température (122a) et, à sa sortie, à un premier commutateur auxiliaire supplémentaire (124a) agencé dans la première ligne de sécurité (112a), le premier commutateur auxiliaire supplémentaire (124a) étant actionnable par le signal de protection contre les températures excessives (138) de la première unité de mesure de température (120a) ; et/ou
dans lequel une deuxième unité de mesure de température (120b) est connectée, à son entrée, à un deuxième capteur de température (122b) et, à sa sortie, à un deuxième commutateur auxiliaire supplémentaire (124b) agencé dans la deuxième ligne de sécurité (112b), le deuxième commutateur auxiliaire supplémentaire (124b) étant actionnable par le signal de protection contre les températures excessives (138) de la deuxième unité de mesure de température (120b).

7. Système de protection et de vérification de batterie (100) selon l'une des revendications précédentes, comprenant en outre :
un dispositif de gestion de batterie (142) adapté à recevoir une tension de cellule (107, U_{C}) depuis chacune des cellules de batterie (104), à détecter une surtension à partir de la tension de cellule (107, U_{C}) et à délivrer un signal de protection contre les surtensions supplémentaire (144) destiné à commuter la batterie (102) sur l'état de sécurité lorsque la surtension est détectée.

8. Système de protection et de vérification de batterie (100) selon la revendication 7,
dans lequel le dispositif de gestion de batterie (142) est adapté en outre à recevoir un signal de capteur supplémentaire (148) depuis un capteur de température supplémentaire (146) de la batterie (102), à détecter une température excessive à partir du signal de capteur supplémentaire (148) et à délivrer un signal de protection contre les températures excessives (150) destiné à commuter la batterie (102) sur l'état de sécurité lorsque la température excessive est détectée.

9. Système de protection et de vérification de batterie (100) selon la revendication 7 ou 8,
dans lequel chacune des unités de mesure de tension (106, 106a, 106b) est connectée, à son entrée, à l'une des cellules de batterie (104) via une première résistance (R1) et une deuxième résistance (R2) connectées en série ;
dans lequel la deuxième résistance (R2) est agencée entre la première résistance (R1) et l'entrée de l'unité de mesure de tension (106, 106a, 106b) ;
dans lequel le générateur de signal de test (130) est connecté, à sa sortie, à un point entre la deuxième résistance (R2) et l'entrée de l'unité de mesure de tension (106, 106a, 106b) ;
dans lequel le dispositif de gestion de batterie (142) est connecté, à son entrée, à un point entre la première résistance (R1) et la deuxième résistance (R2).

10. Système de protection et de vérification de batterie (100) selon la revendication 9,
dans lequel une valeur de résistance de la deuxième résistance (R2) est supérieure à une valeur de résistance de la première résistance (R1).

11. Procédé de fonctionnement d'un système de protection et de vérification de batterie (100) selon l'une des revendications précédentes, le procédé comprenant :
la génération d'une commande de test (134) par le contrôleur de test (132) et l'envoi de la commande de test (134) du contrôleur de test (132) au générateur de signal de test (130), la commande de test (134) amenant le générateur de signal de test (130) à fournir le signal de test de surtension (136) à l'entrée d'au moins une des unités de mesure de tension (106, 106a, 106b) ; et
la vérification, par le contrôleur de test (132), si le signal de protection contre les surtensions (108) est délivré lorsque le signal de test de surtension (136) est fourni à l'entrée de l'au moins une unité de mesure de tension (106, 106a, 106b).

12. Procédé selon la revendication 11,
dans lequel la commande de test (134) amène le générateur de signal de test (130) à fournir le signal de test de surtension (136) pendant une durée inférieure à une durée de commutation d'un commutateur principal (114, 114a, 114b) destiné à commuter la batterie (102) sur l'état de sécurité.

13. Programme d'ordinateur comprenant des instructions qui, lorsque le programme d'ordinateur est exécuté par un ordinateur (132), amènent l'ordinateur (132) à mettre en œuvre le procédé selon la revendication 11 ou 12.

14. Support lisible par ordinateur comprenant des instructions qui, lorsqu'elles sont exécutées par un ordinateur (132), amènent l'ordinateur (132) à mettre en œuvre le procédé selon la revendication 11 ou 12.
